# EUROPEAN PATENT SPECIFICATION

(11) **EP 3 079 410 B1**
(45) Date of publication and mention of the grant of the patent: **06.06.2018**
(21) Application number: 15305529.8
(22) Date of filing: 10.04.2015
(51) Int. Cl.: H04W 48/12, H04W 74/00

(54) **TRANSMITTING CONTROL INFORMATION TO LOW COMPLEXITY USER EQUIPMENT**
ÜBERTRAGUNG VON STEUERUNGSINFORMATIONEN AUF BENUTZERGERÄT MIT NIEDRIGER KOMPLEXITÄT
TRANSMISSION D'INFORMATIONS DE COMMANDE À UN ÉQUIPEMENT UTILISATEUR DE FAIBLE COMPLEXITÉ

(43) Date of publication of application: 12.10.2016
(73) Proprietor: Alcatel Lucent, 91620 Nozay (FR)
(72) Inventor: Wong, Shin Horng, Swindon, Wiltshire SN5 7DJ (GB); Lim, Seau Sian, Swindon, Wiltshire SN5 7DJ (GB); Bhatoolaul, David, Swindon, Wiltshire SN5 7DJ (GB)
(74) Representative: Berthier, Karine

(56) References cited:
- EP-A1- 2 341 725
- EP-A1- 2 765 801
- EP-A1- 2 846 594
- EP-A1- 2 854 465
- WO-A1-2014/003436
- US-A1- 2013 077 582
- US-A1- 2013 083 749
- US-A1- 2013 136 098
- US-A1- 2013 301 524
- "3rd Generation Partnership Project; Technical Specification Group Radio Access Network; Study on provision of low-cost Machine-Type Communications (MTC) User Equipments (UEs) based on LTE (Release 12)", 3GPP STANDARD; 3GPP TR 36.888, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V12.0.0, 25 June 2013 (2013-06-25), pages 1-55, XP050692861, [retrieved on 2013-06-25]

## Description

### FIELD OF THE INVENTION

The field of the invention relates to low complexity user equipment and in particular to transmitting control information to such equipment.

### BACKGROUND

User equipment that can communicate with other devices via a wireless communication network are known. Such devices can be used for very different applications and thus have very different requirements and capabilities. Low complexity or low cost user equipment (LC-UE) such as machine type communication ("MTC") devices are devices that are used by machines for one or more specific applications. One example of such an LC MTC UE is a smart utility meter that communicates readings from the smart meter via the wireless communication network periodically.

Such devices are delay tolerant and do not require a high data throughput. Therefore, they can be designed with low complexity and correspondingly low costs. Typical characteristics of such devices may be a single receiver ("Rx") antenna; a maximum uplink and downlink transmission block size ("TBS") for unicast (data) of say 1000 bits, this amount being related to a correspondingly small buffer on the device. A further restriction that is proposed is to limit the bandwidth of the receiver of such devices. A bandwidth limit of 1.4MHz is envisaged. In a wide system bandwidth the LC-UE can only operate in a slice or subband of the entire system bandwidth.

One potential problem with limiting the bandwidth in this way is that broadcast and unicast control messages maybe in different subbands a UE with a limited RF bandwidth receipt could only decode one or other of these subbands.

Although one solution to this may be to time multiplex the unicast and broadcast control signals, where the control signal is one relating to connection to the network such as a RAR (random access response message) for example, then as these messages are often long and may need a number of repetitions this simple time division multiplexing may lead to receipt of these messages being delayed. This delay may in turn result in the channel conditions having changed when the RAR response is transmitted leading to potential failures or excessive power or repetitions being used.

Embodiments seek to address at least some of the issue outlined above.

US2013/083749 discloses a system where a first random access channel configuration is provided for a regular device and a second RACH configuration is provided for a narrow bandwidth device.

EP2765801 discloses a low complexity device that only supports a narrow frequency band. The problem of control information transmitted in the narrowband not being accurately received or sent is addressed by selecting a sub-control channel domain with a good channel state to send certain control information in.

### SUMMARY

A first aspect of the present invention provides a method performed at a network node of transmitting control information to low complexity user equipment, said control information being transmitted in a first frequency range within a predetermined limited frequency bandwidth that said low complexity user equipment is configured to receive, said method comprising: transmitting in a second frequency range within said limited bandwidth, user specific control information during first predetermined time periods and non-user specific control information during second predetermined time periods, wherein said first and second time periods do not overlap; and transmitting within said limited bandwidth in response to a network connection request from said low complexity user equipment further control information, said further control information being transmitted during further predetermined time periods, said further predetermined time periods overlapping with at least one of said first and second time periods; wherein said further control information is transmitted in a third frequency range that is a different non-overlapping frequency range to said first and second frequency range.

The inventors of the present invention recognised that the reduction in bandwidth that is to be used for transmissions to low complexity user equipment in order to allow them to be configured with lower bandwidth receivers leads to difficulties in transmitting multiple control signals to these user equipment and although time division multiplexing can be used to address this, due to the time dependency of some control signals and their length or repetition requirements it may not be suitable to use time division multiplexing for all signals.

In particular control signals that contain control information sent in response to a network connection request should not be unduly delayed and can be lengthy. Thus, a scheduling system that allows user specific and some non-user specific control signals to be time division multiplexed but does not use time division multiplexing for the connection response control signals is provided. These further control signals are sent in time periods that overlap with either one or both of the other time division multiplexed control signals. This is allowable as they are sent in a different frequency range. This allows control signals to be transmitted within a limited bandwidth without an undue delay between when the connection information is ideally sent and when it is actually sent.

In some embodiments, said first frequency range and said second frequency are a same frequency range and said further control information is transmitted in a third frequency range, and said first, second and third frequency range all have a bandwidth equal to or less than said limited bandwidth.

In order to allow the further control information to be transmitted at the same time as the user specific and non-user specific control information, it is transmitted in a different frequency range, this frequency range having a bandwidth equal to or less than the limited bandwidth. As the control signals transmitted in response to a connection request are expected by the user equipment (being in response to a request) then providing them in a different frequency range may be acceptable as the user equipment will know when to monitor this frequency range and can at other times monitor the frequency range of the other signals. In effect when awaiting a connection response the user equipment will prioritise these signals and will monitor for them rather than for the other signals.

In some embodiments, said first, second and third frequency range all have a bandwidth equal to said limited bandwidth.

Although the first, second and third frequency range may have a bandwidth that is less than the limited bandwidth, in some embodiments they may have a bandwidth equal to this limited bandwidth. This can be advantageous as using as much bandwidth as the LC UE can receive increases the amount of information that can be sent. Thus, in this case, the same limited bandwidth is used for the time division multiplexed control signals and the further control signal but a different frequency range is used. Thus, provided the user equipment is aware of the different frequency ranges that are used it can monitor the appropriate frequency range depending upon whether it is awaiting a further control signal having transmitted a connection request, perhaps in the form of a preamble, or not. Where it has not transmitted such a request, it can monitor the frequency range where the user specific and non-user specific control signal such as paging information are transmitted in a time division multiplexed fashion, where it is awaiting a connection response it can prioritise this and monitor the frequency range used to transmit these signals.

In some embodiments, said predetermined limited frequency bandwidth comprises a frequency range encompassing a plurality of physical resource blocks each having a different frequency range, wherein when transmitted at overlapping times said further control information is transmitted in one subset of said plurality of physical resource blocks, and said specific or non-specific control information is transmitted in a different subset of said plurality of physical resource blocks.

The limited frequency bandwidth may be such that a plurality of physical resource blocks that are a unit of resource allocation in the frequency domain are encompassed within this bandwidth. Thus, when transmitting control signals within this limited bandwidth, a plurality of physical resource blocks are used and during times when further control information is transmitted at a same time as one of user specific or non-user specific control information, then a subset of the plurality of physical resource blocks are used for the transmission of the further control information and the rest of the physical control blocks are used for transmission of the other control information.

In some embodiments, transmission of said control signal is repeated a predetermined number of times, said predetermined number of times being increased for said user-specific and non-user specific control information when said further control information is transmitted.

As this method applies to low complexity user equipment, then repetition of signalling maybe used to enable user equipment in high attenuation areas to receive the signals. Where the limited frequency range is divided between the further control signals and the user specific or non-user specific control signals, then additional repetition of the signals may be used to compensate for this sharing of resource.

In some embodiments, said non-user specific control information comprises broadcast control information that does not include messages broadcast in response to a random access request by a user equipment, said user specific control information comprises unicast control messages transmitted to a user equipment including paging messages and said further control information comprises messages broadcast in response to a random access request by a user equipment including RAR random access response messages and Msg 4 messages.

The control information that is time division multiplexed may include paging messages and other control information that is not related to connection requests.

Although this idea is applicable to any system where user equipment have a limited receiving bandwidth, it is envisaged for use with a 1.4MHz bandwidth limitation which has been proposed for the standard.

In some embodiments, the method comprises transmitting towards said low complexity user equipment scheduling information indicating timings of at least one of said first, second and further predetermined time periods.

The user equipment should be aware of the scheduling of the time periods and this may be configured within the system or it may be transmitted towards the user equipment within information blocks such as SIBs (system information blocks) or MIBs (master information block).

Where the further control information and the time division multiplexed control information are transmitted in different frequency ranges each having a limited bandwidth, then information regarding these frequency ranges should be communicated to the user equipment and again this maybe a system standard and the user equipment may be configured to monitor these frequency ranges, or the information maybe transmitted to the user equipment in information blocks.

A second aspect of the present invention provides a network node for transmitting control information to low complexity user equipment, said control information being transmitted within a predetermined limited frequency bandwidth, that is a bandwidth that said low complexity user equipment is configured to receive, said network node comprising: a transmitter operable to transmit signals to user equipment; and control circuitry operable to control said transmitter to: transmit within a first frequency range within said limited frequency bandwidth, user specific control information during first predetermined time periods and in a second frequency range within said limited frequency bandwidth non-user specific control information during second predetermined time periods, wherein said first and second time periods do not overlap; and in response to a network connection request from said low complexity user equipment, to transmit within said limited bandwidth further control information, said further control information being transmitted during further predetermined time periods, said further predetermined time periods overlapping with at least one of said first and second time periods; wherein said further control information is transmitted in a third frequency range that is a different non-overlapping frequency range to said first and said second frequency range.

A third aspect of the present invention provides a method performed at a low complexity user equipment configured to receive control information within a predetermined limited frequency bandwidth, said method comprising: monitoring a first frequency range within said predetermined limited bandwidth during a first predetermined time period for user specific control information; monitoring a second frequency range within said predetermined limited bandwidth during a second predetermined time period for non-user specific control information, wherein said first and second time periods do not overlap; and following transmission by said low complexity user equipment of a network connection request, monitoring a third frequency range within said predetermined limited bandwidth during a further time period for further control information, said further predetermined time period overlapping with at least one of said first and second time periods and said third frequency range not overlapping with said first or said second frequency range.

Low complexity user equipment that are configured to receive information within a certain limited frequency bandwidth can monitor a first and second frequency range within predetermined time periods to detect user specific control information or non-user specific control information and if they have transmitted a connection request then they can monitor a third frequency range within another predetermined time period that overlaps with the first and second time periods to determine control information relating to the connection request. In this way, the information relating to the connection request is not time division multiplexed with the other control information and thus, it is transmitted to the user equipment without the delay that might be added were time division multiplexing to be used for its transmission.

In some embodiments, said first and second frequency range are a same frequency range.

Although the control signals transmitted during the first time period and those transmitted during the second time period may be transmitted in different frequency bands, as they are not transmitted at the same time they may alternatively be transmitted in the same frequency band. The latter may be convenient for the user equipment as it will not need to monitor different frequency bands during these different time periods.

The third frequency range may have the same limited bandwidth as the first and second frequency range but be displaced from them in frequency. In this case, the user equipment should be aware of the frequency ranges and is configured to monitor one of the different frequency ranges depending upon whether it has transmitted a connection request or not and whether it is in the first or second predetermined time period where the first and second frequency ranges are different.

The user equipment may be made aware of the different frequency ranges from system or master information blocks transmitting this information or it maybe configured with this information.

In some embodiments, said predetermined limited frequency bandwidth comprises a frequency range encompassing a plurality of physical resource blocks each having a different frequency range, wherein said further control information is received in one subset of said plurality of physical resource blocks, and said user specific or non-user specific control information is received in a different subset of said plurality of physical resource blocks.

In some embodiments, the method comprises an initial step of receiving information from a network node indicating at least one of said first, second and further time periods.

The first, second and further time periods maybe transmitted from the network node to the user equipment, alternatively the user equipment may be configured with them. Additionally, the frequency ranges that the signals are transmitted in may also be transmitted to the user equipment such that it knows which frequency ranges to monitor or it maybe configured with these ranges.

A fourth aspect of the present invention provides a low complexity user equipment comprising: a receiver configured to receive control information within a predetermined limited frequency bandwidth; monitoring circuitry operable to monitor a first frequency range within said predetermined limited bandwidth during a first predetermined time period for user specific control information; monitoring circuitry operable to monitor a second frequency range within said predetermined limited bandwidth during a second predetermined time period for non-user specific control information, wherein said first and second time periods do not overlap; and a transmitter operable to transmit a network connection request; wherein said monitoring circuitry is operable to monitor a third frequency range within said predetermined limited bandwidth during a further time period for further control information, said further predetermined time period overlapping with at least one of said first and second time periods and said second frequency range not overlapping with said first or said second frequency range.

A fifth aspect of the present invention provides a computer program that when executed by a computer is operable to control the computer to perform a method according to a first or a third aspect to the present invention.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates time division multiplexing of user specific and non-user specific control signals, and the potential time delay for transmitting a RAR;
Figure 2 illustrates time division multiplexing of user specific and some non-user specific control signals with frequency division multiplexing for transmission of further connection control signals according to an embodiment;
Figure 3 shows the frequency ranges for transmission of control signals according to an embodiment;
Figure 4 shows the division of subframes into physical resource blocks for transmission of control signals according to another embodiment;
Figure 5 shows a flow diagram illustrating steps of a method performed at a user equipment; and
Figure 6 shows a flow diagram illustrating steps of a method performed at a network node.

### DESCRIPTION OF THE EMBODIMENTS

Before discussing the embodiments in any more detail, first an overview will be provided.

Low complexity user equipment such as Machine Type Communication (MTC) device is a UE that is used by a machine for specific application. In Rel-12 a Work Item on Low Complexity MTC (LC-MTC) UE was concluded where the complexity (cost) of the MTC UE is reduced by approximately 50%. In Rel-13, another WI (work item) is agreed to further reduce the complexity of MTC UE, to enhance the coverage and also to improve power consumption of MTC UE.

The main technique exploited to decrease the LC-MTC complexity is to reduce the RF bandwidth of the UE to 1.4 MHz (operating with 6 PRBs, where a PRB (Physical Resource Block) is a unit of resource allocation in the frequency domain). The LC-MTC UE is expected to operate in any system bandwidth and shall be able to co-exist with legacy UEs. It is also expected that LC-MTC UE can retune its frequency to operate in different (1.4 MHz) sub-bands within the (larger) system bandwidth to allow frequency multiplexing among LC-MTC UE and also with legacy UE.

For the coverage enhancement aspect of this WI, the main technique is repetition of the physical channel. It is expected that the number of repetitions to be high (hundreds of repetitions), which would have a significant impact to the spectral efficiency.

In legacy system, PDCCH is the control channel used to dynamically allocate resources and configuration for PDSCH (broadcast and unicast). Due to the reduced RF bandwidth to 1.4MHz, the PDCCH cannot be used by LC-MTC UE since PDCCH spans the entire system bandwidth. A straightforward method is to introduce EPDCCH (enhanced physical downlink control channel) as control channel to dynamically allocate resources and configuration for broadcast and unicast PDSCH (physical downlink shared channel).

As the subband or frequency used for EPDCCH for broadcast and that for unicast PDSCH can be different in a subframe, the UE with such RF bandwidth restriction can only decode either one or the other in a subframe. In Rel-12 LC MTC, the control channel for PDSCH does not have this issue as the UE can decode both the CSS (for broadcast PDSCH) and USS (for unicast PDSCH) on the PDCCH simultaneously. In Rel-12, the only restriction for simultaneous reception of broadcast and unicast PDSCH is the TBS size restriction and it is left to UE implementation to handle these receptions. With the limitation of a Rel-13 LC MTC UE being able to receive only 1 EPDCCH, the UE which continuously monitors EPDCCH for unicast PDSCH will not be able to monitor EPDCCH for broadcast PDSCH. If the UE autonomously monitors EPDCCH for broadcast PDSCH in some subframes and it is not known to the eNB, eNB may waste resources on unicast PDSCH. E.g. in the non-coverage enhanced case, if it is left to the UE implementation when to decode EPDCCH for broadcast PDSCH, resources for unicast PDSCH will be wasted at some subframes (i.e. EPDCCH for broadcast PDSCH and paging PDSCH) between the UE paging cycle since the UE needs to decode paging once during a paging cycle. In the coverage enhanced case, it is even worse as resources for unicast PDSCH will be wasted on all the repetitions of the EPDCCH and also the paging PDSCH.

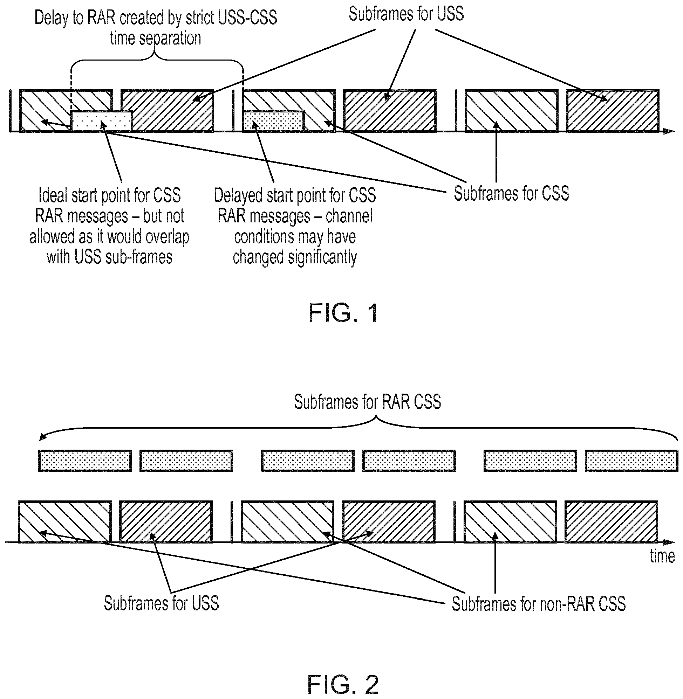

Whilst simple network specified time division of EPDCCH for unicast and broadcast traffic would resolve the above issue, it also creates a new issue for broadcast RAR response messages. Since RAR responses messages can be very long due to their variable timing structure and also due to the number of repetitions that maybe required, it is likely that a simple time division scheme would result in RAR response messages being delayed to the next broadcast time segment (see example in Figure 1). This additional delay of at least one unicast time segment could result in the channel conditions changing dramatically by the time the RAR response message are broadcast, which in turn will increase the likelihood that the subsequent RAR response messages are transmitted based on outdated channel assumptions, leading to either more failed RAR response messages or RAR responses messages transmitted with higher power/ more repetitions than actually required.

In RRC_Connected of a legacy UE, the UE has to keep track of the following broadcast PDCCH/PDSCH:
- PDCCH/ PDSCH associated with paging for any PWS (public warning system) alert
- PDCCH/ PDSCH associated with SI containing the SIBs if it is indicated by paging of any SIB changes and/or PWS transmission
- PDCCH/PDSCH associated with RAR after PRACH transmission (due to SR trigger or UL time alignment trigger due to UL data arrival)

In the legacy UE behaviour, a RRC Connected UE may not have to read the paging at its paging occasion and can decode at other paging occasion as long as it monitors paging at least every default paging cycle. In this case, there is no way the network will know when the UE would decode the EPDCCH for paging. Hence for Rel-13 LC-MTC, the solution is to fix such broadcast subframes.

The basic idea of embodiments is to define broadcast subframes, where during the said broadcast subframes, the MTC UE is not expected to monitor the EPDCCH USS (UE Specific Search Space), i.e., for unicast message scheduling. The eNB can schedule broadcast related or the scheduling information e.g. EPDCCH CSS for broadcast messages and some related broadcast messages during the said broadcast subframes.

The basic idea is to define 3 types of subframes:
Type 1 subframes are for scheduling broadcast traffic excluding RAR and Msg 4, where the MTC is not expected to monitor for Type 2 or Type 3.
Type 2 subframes are for scheduling unicast traffic, where the MTC UE is not expected to monitor for Type 1 or Type 3.
Type 3 subframes are for scheduling broadcast RAR traffic and scheduling for Msg 4, where the MTC is not expected to monitor the Type 1 or Type 2.

Type 1 and Type 2 subframes are separated in time, i.e. time multiplexed. The separation is known and specified by the network.

Type 3 subframes can overlap type 1 and type 2 in time. This is to reflect the length of RAR messages and also the importance of the UE prioritizing quick reception of RAR before channel conditions change significantly, even at the cost of losing the ability to listen for other unicast or broadcast traffic. Type 3 subframes are also used for DCI (downlink control information) to schedule Msg 4. Apart from allowing a quick scheduling for RAR and Msg 4, this solution also allows simple implementation of the UE timing, e.g. having a fixed time between sending preamble and expecting to receive scheduling for RAR.

In an embodiment, Type 3 subframes can be separated in frequency, for example in different subband or different PRB when sharing subband with either Type 1 or Type 2 message.

Since Type 3 subframe can overlap Type 1, the UE would have to choose which to decode especially if they are in different subbands and in another embodiment, the UE prioritise Type 3 subframes over Type 1. This recognizes that different common messages have different priorities.

Figure 1 shows strict time division multiplexing of broadcast (non-user specific) control messages, termed CSS and unicast (user specific) control messages, termed USS in separate subframes. It also shows the potential delay that this strict time division multiplexing of the control signals can cause in a RAR response to a connection request. As can be seen where the RAR is generated during a subframe for broadcast control messages it cannot be transmitted until a start of a next subframe for these control messages and this occurs after the subframe for transmitting the unicase messages. This delays this transmission and this can have an unfortunate effect where channel conditions have changed.

Figure 2 schematically shows a way of addressing this according to an embodiment. In this case time division multiplexing is used for the for the unicast USS control signals and for some of the broadcast CSS signals, but the time dependent CSS signals such as responses to connection requests maybe transmitted at a same time as the other subframes but in a way such that they do not overlap in the frequency domain.

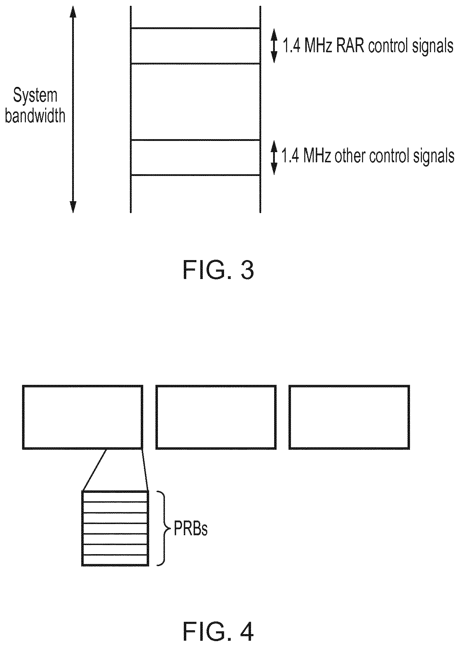

Figure 3 shows one embodiment where the RAR control subframes are transmitted in one frequency range within a limited bandwidth and the other control signals are transmitted in a second range with the same limited bandwidth. Information indicating these frequency ranges is provided to the user equipment and the user equipment monitors the appropriate frequency range depending upon whether it has transmitted a connection request or not.

Figure 4 shows an alternative embodiment where the subframes for transmitting the control signals each comprise a plurality, in this embodiment six, physical resource blocks PRBs. When a connection response message is to be transmitted, the PRBs are subdivided such that in this embodiment, three are used for the non-connection control signals and three are used for the connection control signals. Thus, in each transmitted sub frame, 3 PRBS contain connection message responses while the other three are used for either user-specific or non-user specific control signals in a time division multiplexed way. In this regard, where the low complexity user equipment is in an area of high attenuation and requires repetition of the messaging, then more repetition will be required where the bandwidth resource is shared in this way. When no connection control response messages are being transmitted all 6 PRBs can be used for the time division multiplexed control signals.

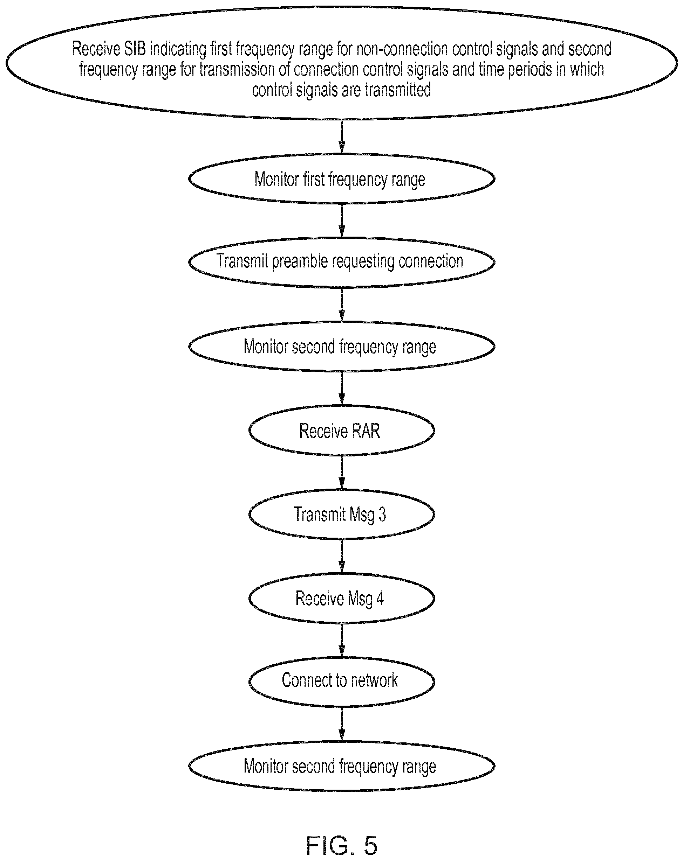

Figure 5 shows a flow diagram illustrating steps performed at a user equipment where the control signals are split between frequency ranges as is shown in Figure 3. In this embodiment the information regarding the frequency ranges and time periods of transmission of the different control signals is transmitted to the user equipment in a system information block, although in other embodiments the user equipment maybe configured with this information or it maybe received in another type of message. In any case, the user equipment will monitor the first frequency range indicated until it transmits a connection request in this case in the form of a preamble. Then it is looking to receive a response to this so it monitors the second frequency range which is the frequency range in which these signals are sent. Once it has received the RAR and the following Msg4, it will then monitor the first frequency range for other control signals. In this way a user equipment with a limited bandwidth receiver is able to receive connection control messages without undue delay and when not expecting them is able to monitor for other control signals.

In the embodiment of Figure 5, the control signals not related to a connection request are transmitted in the same "first" frequency range. In some embodiments they may be transmitted in two different frequency ranges in which case the user equipment will monitor each of the two different frequency ranges in the time periods that these control signals are transmitted in until it transmits a connection request whereupon it will monitor the frequency range that is used for transmitting responses to the connection request.

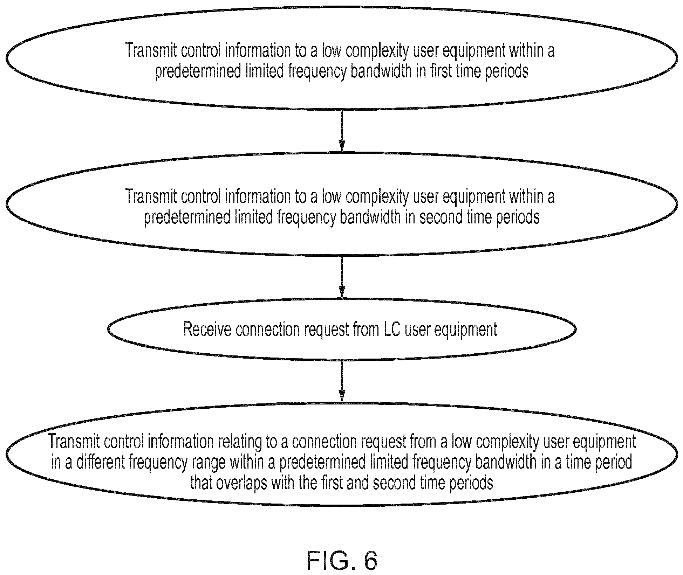

Figure 6 shows a flow diagram illustrating steps of a method performed at a network node. The network node transmits control information to low complexity user equipment within a limited bandwidth that the LC user equipment is able to receive within a recurring first time period. It also transmits further unicast control information within the limited bandwidth towards a specific LC user equipment within a second recurring time period that does not overlap with the first time period. When it receives a connection request from LC user equipment requesting connection it will transmit connection responses within a time period that overlaps with the first and second time period and in a different non-overlapping frequency band, allowing the LC user equipment to receive this information in a timely manner. It will continue to transmit other control information to other LC user equipment in the other limited bandwidth(s) and in the designated recurring time periods.

The user equipment is aware of the frequency bands and the time periods of transmission and thus, can monitor for these signals. As the time period of transmission of the control information relating to the connection request overlaps with the first and second time periods (which do not overlap) the user equipment can prioritise monitoring for this information during the time that it is awaiting these signals.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined in the appended claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method performed at a network node of transmitting control information to low complexity user equipment, said control information being transmitted in a first frequency range within a predetermined limited frequency bandwidth that said low complexity user equipment is configured to receive, said method comprising:
transmitting in a second frequency range within said limited bandwidth, user specific control information during first predetermined time periods and non-user specific control information during second predetermined time periods, wherein said first and second time periods do not overlap; and
transmitting within said limited bandwidth in response to a network connection request from said low complexity user equipment further control information, said further control information being transmitted during further predetermined time periods, said further predetermined time periods overlapping with at least one of said first and second time periods; wherein
said further control information is transmitted in a third frequency range that is a different non-overlapping frequency range to said first and second frequency range.

2. A method according to claim 1, wherein said first frequency and second frequency range are a same frequency range, and said first, second and third frequency range all have a bandwidth equal to or less than said limited bandwidth.

3. A method according to claim 2, wherein said first,second and third frequency range all have a bandwidth equal to said limited bandwidth.

4. A method according to claim 1, wherein said predetermined limited frequency bandwidth comprises a frequency range encompassing a plurality of physical resource blocks each having a different frequency range, wherein when transmitted at overlapping times said further control information is transmitted in one subset of said plurality of physical resource blocks, and said specific or non-specific control information is transmitted in a different subset of said plurality of physical resource blocks.

5. A method according to claim 4, wherein transmission of said control information is repeated a predetermined number of times, said predetermined number of times being increased for said user-specific and non-user specific control information when said further control information is transmitted.

6. A method according to any preceding claim, wherein said non-user specific control information comprises broadcast control information that does not include messages broadcast in response to a random access request by a user equipment, said user specific control information comprises unicast control messages transmitted to a user equipment including paging messages and said further control information comprises messages broadcast in response to a random access request by a user equipment including RAR random access response messages and MSg 4 messages.

7. A method according to any preceding claim, wherein said predetermined limited bandwidth is a bandwidth of 1.4 MHz.

8. A method according to any preceding claim, comprising transmitting towards said low complexity user equipment scheduling information indicating timings of at least one of said first, second and further predetermined time periods.

9. A network node for transmitting control information to low complexity user equipment, said control information being transmitted within a predetermined limited frequency bandwidth, that is a bandwidth that said low complexity user equipment is configured to receive, said network node comprising:
a transmitter operable to transmit signals to user equipment; and
control circuitry operable to control said transmitter to:
transmit within a first frequency range within said limited frequency bandwidth, user specific control information during first predetermined time periods and in a second frequency range within said limited frequency bandwidth non-user specific control information during second predetermined time periods, wherein said first and second time periods do not overlap; and
in response to a network connection request from said low complexity user equipment, to transmit within said limited bandwidth further control information, said further control information being transmitted during further predetermined time periods, said further predetermined time periods overlapping with at least one of said first and second time periods; wherein
said further control information is transmitted in a third frequency range that is a different non-overlapping frequency range to said first and said second frequency range.

10. A method performed at a low complexity user equipment configured to receive control information within a predetermined limited frequency bandwidth, said method comprising:
monitoring a first frequency range within said predetermined limited bandwidth during a first predetermined time period for user specific control information;
monitoring a second frequency range within said predetermined limited bandwidth during a second predetermined time period for non-user specific control information, wherein said first and second time periods do not overlap; and
following transmission by said low complexity user equipment of a network connection request, monitoring a third frequency range within said predetermined limited bandwidth during a further time period for further control information, said further predetermined time period overlapping with at least one of said first and second time periods and said third frequency range not overlapping with said first or second frequency range.

11. A method according to claim 10, wherein said first and second frequency range are a same frequency range.

12. A method according to claim 10 or 11, wherein said predetermined limited frequency bandwidth comprises a frequency range encompassing a plurality of physical resource blocks each having a different frequency range, wherein said further control information is received in one subset of said plurality of physical resource blocks, and said specific or non-specific control information is received in a different subset of said plurality of physical resource blocks.

13. A method according to any one of claims 10 to 12, comprising an initial step of receiving information from a network node indicating at least one of said first, second and further time periods.

14. A low complexity user equipment comprising:
a receiver configured to receive control information within a predetermined limited frequency bandwidth;
monitoring circuitry operable to monitor a first frequency range within said predetermined limited bandwidth during a first predetermined time period for user specific control information;
monitoring circuitry operable to monitor a second frequency range within said predetermined limited bandwidth during a second predetermined time period for non-user specific control information, wherein said first and second time periods do not overlap; and
a transmitter operable to transmit a network connection request; wherein
said monitoring circuitry is operable to monitor a third frequency range within said predetermined limited bandwidth during a further time period for further control information, said further predetermined time period overlapping with at least one of said first and second time periods and said third frequency range not overlapping with said first or said second frequency range.

15. A computer program which when executed by a computer is operable to control said computer to perform steps in a method according to any one of claims 1 to 8 and 10 to 13.

## Patentansprüche

1. Verfahren, durchgeführt an einem Netzwerkknoten zum Übertragen von Steuerinformation auf ein Teilnehmergerät geringer Komplexität, wobei besagte Steuerinformation in einem ersten Frequenzbereich innerhalb einer vorbestimmten begrenzten Frequenzbandbreite übertragen wird, für die besagtes Teilnehmergerät geringer Komplexität konfiguriert ist zum Empfangen, wobei das Verfahren umfasst:
Übertragen in einem zweiten Frequenzbereich innerhalb besagter begrenzter Bandbreite von benutzerspezifischer Steuerinformation während erster vorbestimmter Zeiträume und nicht benutzerspezifischer Steuerinformation während zweiter vorbestimmter Zeiträume, wobei besagte erste und zweite Zeiträume sich nicht überlappen; und
Übertragen innerhalb besagter begrenzter Bandbreite als Antwort auf eine Netzwerkverbindungsanforderung von besagtem Teilnehmergerät geringer Komplexität weiterer Steuerinformation, wobei besagte weitere Steuerinformation übertragen wird während weiterer vorbestimmter Zeiträume, wobei besagte weitere vorbestimmte Zeiträume überlappen mindestens mit einem besagter erster und zweiter Zeiträume;
wobei besagte weitere Steuerinformation in einem dritten Frequenzbereich übertragen wird, der ein unterschiedlicher nicht überlappender Frequenzbereich ist zu besagtem ersten und zweiten Frequenzbereich.

2. Verfahren nach Anspruch 1, wobei besagter erster und zweiter Frequenzbereich ein gleicher Frequenzbereich sind und besagter erster, zweiter und dritter Frequenzbereich alle eine Bandbreite aufweisen, die gleich oder kleiner besagter begrenzter Bandbreite ist.

3. Verfahren nach Anspruch 2, wobei besagter erster, zweiter und dritter Frequenzbereich alle eine Bandbreite aufweisen, die gleich besagter begrenzter Bandbreite ist.

4. Verfahren nach Anspruch 1, wobei besagte vorbestimmte begrenzte Frequenzbandbreite einen Frequenzbereich umfasst, der eine Vielzahl von physischen Ressourcenblöcken umspannt, die einen unterschiedlichen Frequenzbereich aufweisen, wobei, wenn zu überlappenden Zeiten übertragen wird, besagte weitere Steuerinformation übertragen wird in einem Untersatz von besagter Vielzahl physikalischer Ressourcenblöcke, und wobei besagte spezifische oder nicht spezifische Steuerinformation in einem unterschiedlichen Untersatz von besagter Vielzahl physikalischer Ressourcenblöcke übertragen wird.

5. Verfahren nach Anspruch 4, wobei die Übertragung besagter Steuerinformation eine vorbestimmte Anzahl von Malen wiederholt wird, wobei besagte bestimmte Anzahl von Malen erhöht wird für benutzerspezifische und nicht benutzerspezifische Steuerinformation, wenn besagte weitere Steuerinformation übertragen wird.

6. Verfahren nach einem beliebigen der vorhergehenden Ansprüche, wobei besagte nicht benutzerspezifische Steuerinformation umfasst Rundfunksteuerinformation, die keine Nachrichten einschließt, die rundgesendet werden als Antwort auf eine randomisierte Zugangsanforderung durch ein Teilnehmergerät, wobei besagte benutzerspezifische Steuerinformation umfasst Unicast-Steuernachrichten, die übertragen werden auf ein Teilnehmergerät, einschließlich Paging-Nachrichten und wobei besagte weitere Steuerinformation Nachrichten umfasst, die rundgesendet werden als Antwort auf eine randomisierte Zugangsanforderung durch ein Teilnehmergerät, einschließend RAR-Nachrichten (random access response) und MSg4-Nachrichten.

7. Verfahren nach einem beliebigen vorhergehenden Anspruch, wobei besagte vorbestimmte begrenzte Bandbreite eine Bandbreite von 1,4 MHz ist.

8. Verfahren nach einem beliebigen der vorhergehenden Ansprüche, umfassend das Übertragen auf besagtes Teilnehmergerät geringer Komplexität von Planungsinformation, die Timings angibt mindestens eines von besagten ersten, zweiten und weiteren vorbestimmten Zeiträumen.

9. Netzwerkknoten zum Übertragen von Steuerinformation auf ein Teilnehmergerät mit niedriger Komplexität, wobei besagte Steuerinformation innerhalb einer vorbestimmten begrenzten Frequenzbandbreite übertragen wird, wobei es sich um die Bandbreite handelt, für die besagtes Teilnehmergerät geringer Komplexität konfiguriert ist zum Empfangen, wobei besagter Netzwerkknoten umfasst:
einen Sender, der betreibbar ist zum Übertragen von Signalen auf ein Teilnehmergerät; und
einen Steuerschaltkreis, der betreibbar ist zum Steuern besagten Senders zum:
Übertragen in einem ersten Frequenzbereich innerhalb besagter begrenzter Frequenzbandbreite von benutzerspezifischer Steuerinformation während erster vorbestimmter Zeiträume und in einem zweiten Frequenzbereich innerhalb besagter begrenzter Frequenzbandbreite von nicht benutzerspezifischer Steuerinformation während zweiter vorbestimmter Zeiträume, wobei besagte erste und zweite Zeiträume sich nicht überlappen; und
als Antwort auf eine Netzwerkverbindungsanforderung von besagtem Teilnehmergerät geringer Komplexität Übertragen innerhalb besagter begrenzter Bandbreite weiterer Steuerinformation, wobei besagte weitere Steuerinformation übertragen wird während weiterer vorbestimmter Zeiträume, wobei besagte weitere vorbestimmte Zeiträume überlappen mindestens mit einem besagter erster und zweiter Zeiträume; wobei besagte weitere Steuerinformation in einem dritten Frequenzbereich übertragen wird, der ein unterschiedlicher nicht überlappender Frequenzbereich ist zu besagtem ersten und zweiten Frequenzbereich.

10. Verfahren, durchgeführt an einem Teilnehmergerät geringer Komplexität, das konfiguriert ist zum Empfangen von Steuerinformation innerhalb einer vorbestimmten begrenzten Frequenzbandbreite, wobei besagtes Verfahren umfasst:
Überwachen eines ersten Frequenzbereichs innerhalb besagter vorbestimmter begrenzter Bandbreite während eines schnellen vorbestimmten Zeitraums für benutzerspezifische Steuerinformation;
Überwachen eines zweiten Frequenzbereichs innerhalb besagter vorbestimmter begrenzter Bandbreite während eines zweiten vorbestimmten Zeitraums für nicht benutzerspezifische Steuerinformation, wobei besagter schneller und zweiter Zeitraum sich nicht überlappen; und
nach dem Übertragen durch besagtes Teilnehmergerät geringer Komplexität einer Netzwerkverbindungsanforderung, Überwachen eines dritten Frequenzbereichs innerhalb besagter vorbestimmter begrenzter Bandbreite während eines weiteren Zeitraums für weitere Steuerinformation, wobei besagter weiterer vorbestimmter Zeitraum überlappt mit mindestens besagtem dritten Frequenzbereich, der nicht überlappt mit besagtem schnellen oder zweiten Frequenzbereich.

11. Verfahren nach Anspruch 10, wobei besagter schneller und zweiter Frequenzbereich derselbe Frequenzbereich sind.

12. Verfahren nach Anspruch 10 oder 11, wobei besagte vorbestimmte begrenzte Frequenzbandbreite umfasst einen Frequenzbereich, der eine Vielzahl von physischen Ressourcenblöcken umspannt, wobei jeder einen unterschiedlichen Frequenzbereich aufweist, wobei besagte weitere Steuerinformation empfangen wird in einem Untersatz von besagter Vielzahl physikalischer Ressourcenblöcke, und wobei besagte benutzerspezifische und nicht benutzerspezifische Steuerinformation empfangen wird in einem unterschiedlichen Untersatz von besagter Vielzahl physikalischer Ressourcenblöcke.

13. Verfahren nach einem beliebigen der Ansprüche 10 bis 12, umfassend einen Startschritt zum Empfangen von Information von einem Netzwerkknoten und Angabe mindestens eines aus erstem, zweitem und weiteren Zeiträumen.

14. Teilnehmergerät geringer Komplexität, umfassend:
einen Empfänger, der konfiguriert ist zum Empfangen von Steuerinformation innerhalb einer vorbestimmten begrenzten Frequenzbandbreite;
einen Überwachungsschaltkreis, der betreibbar ist zum Überwachen eines ersten Frequenzbereichs innerhalb besagter vorbestimmter begrenzter Bandbreite während eines ersten vorbestimmten Zeitraums für benutzerspezifische Steuerinformation;
einen Überwachungsschaltkreis, der betreibbar ist zum Überwachen eines zweiten Frequenzbereichs innerhalb besagter vorbestimmter begrenzter Bandbreite während eines zweiten vorbestimmten Zeitraums für nicht benutzerspezifische Steuerinformation, wobei besagter erster und zweiter Zeitraum sich nicht überlappen; und
einen Sender, der betreibbar ist zum Übertragen einer Netzwerkverbindungsanforderung; wobei besagter Überwachungsschaltkreis betreibbar ist zum Überwachen eines dritten Frequenzbereichs innerhalb besagter vorbestimmter begrenzter Bandbreite während eines weiteren Zeitraums für weitere Steuerinformation, wobei besagter weiterer vorbestimmter Zeitraum überlappt mit mindestens einem aus besagtem ersten und zweiten Zeitraum und wobei besagter dritter Frequenzbereich nicht überlappt mit besagtem ersten oder zweiten Frequenzbereich.

15. Computerprogramm, welches, wenn es von einem Computer ausgeführt wird, betreibbar ist zum Steuern besagten Computers zum Durchführen von Schritten in einem Verfahren, das einem beliebigen der Ansprüche 1 bis 8 und 10 bis 13 entspricht.

## Revendications

1. Procédé mis en oeuvre sur un noeud de réseau destiné à transmettre des informations de commande à un équipement utilisateur de faible complexité, lesdites informations de commande étant transmises dans une première plage de fréquences au sein d'une bande passante de fréquences limitée prédéterminée que ledit équipement utilisateur de faible complexité est configuré pour recevoir, ledit procédé comprenant les étapes suivantes :
transmettre dans une deuxième plage de fréquences au sein de ladite bande passante limitée, des informations de commande spécifiques à l'utilisateur durant des premiers intervalles de temps prédéterminés et des informations de commande non spécifiques à l'utilisateur durant des deuxièmes intervalles de temps prédéterminés, lesdits premiers et deuxièmes intervalles de temps ne se chevauchant pas ; et
transmettre dans ladite bande passante limitée en réponse à une demande de connexion au réseau dudit équipement utilisateur de faible complexité des informations de commande complémentaires, lesdites informations de commande complémentaires étant transmises durant d'autres intervalles de temps prédéterminés, lesdits autres intervalles de temps prédéterminés chevauchant au moins l'un desdits premiers et deuxièmes intervalles de temps ; dans lequel
lesdites informations de commande complémentaires sont transmises dans une troisième plage de fréquences qui est une plage de fréquences différente ne chevauchant pas lesdites première et deuxième plages de fréquences.

2. Procédé selon la revendication 1, dans lequel lesdites première et deuxième plages de fréquences sont une même plage de fréquences, et lesdites première, deuxième et troisième plages de fréquences ont toutes une bande passante égale ou inférieure à ladite bande passante limitée.

3. Procédé selon la revendication 2, dans lequel lesdites première, deuxième et troisième plages de fréquences ont toutes une bande passante égale à ladite bande passante limitée.

4. Procédé selon la revendication 1, dans lequel ladite bande passante de fréquences limitée prédéterminée comprend une plage de fréquences englobant une pluralité de blocs de ressources physiques ayant chacun une plage de fréquences différente, dans lequel lorsqu'elles sont transmises dans des intervalles temporels se chevauchant lesdites informations de commande complémentaires sont transmises dans un sous-ensemble de ladite pluralité de blocs de ressources physiques, et lesdites informations de commande spécifiques ou non spécifiques sont transmises dans un sous-ensemble différent de ladite pluralité de blocs de ressources physiques.

5. Procédé selon la revendication 4, dans lequel la transmission desdites informations de commande est répétée un nombre de fois prédéterminé, ledit nombre de fois prédéterminé étant augmenté pour lesdites informations de commande spécifiques à l'utilisateur et non spécifiques à l'utilisateur lorsque lesdites informations de commande complémentaires sont transmises.

6. Procédé selon l'une quelconque des revendications précédentes, dans lequel lesdites informations de commande non spécifiques à l'utilisateur comprennent des informations de commande de diffusion qui n'incluent pas de diffusion de messages en réponse à une demande d'accès aléatoire d'un équipement utilisateur, lesdites informations de commande spécifiques à l'utilisateur comprennent des messages de commande de monodiffusion transmis à un équipement utilisateur incluant des messages de radiomessagerie et lesdites informations de commande complémentaires comprennent une diffusion de messages en réponse à une demande d'accès aléatoire d'un équipement utilisateur incluant des messages de réponse d'accès aléatoire RAR et des messages MSg 4.

7. Procédé selon l'une quelconque des revendications précédentes, dans lequel ladite bande passante limitée prédéterminée est une bande passante de largeur 1,4 MHz.

8. Procédé selon l'une quelconque des revendications précédentes, comprenant la transmission vers ledit équipement utilisateur de faible complexité d'informations de planification indiquant la synchronisation temporelle d'au moins l'un desdits premiers, deuxièmes et autres intervalles de temps prédéterminés.

9. Noeud de réseau destiné à transmettre des informations de commande à un équipement utilisateur de faible complexité, lesdites informations de commande étant transmises dans une bande passante de fréquences limitée prédéterminée, à savoir une bande passante que ledit équipement utilisateur de faible complexité est configuré pour recevoir, ledit noeud de réseau comprenant :
un émetteur permettant de transmettre des signaux à l'équipement utilisateur ; et
un ensemble de circuits de commande permettant de commander audit émetteur de :
transmettre dans une première plage de fréquences au sein de ladite bande passante limitée prédéterminée, des informations de commande spécifiques à l'utilisateur durant des premiers intervalles de temps prédéterminés et dans une deuxième plage de fréquences au sein de ladite bande passante limitée prédéterminée des informations de commande non spécifiques à l'utilisateur durant des deuxièmes intervalles de temps prédéterminés, lesdits premiers et deuxièmes intervalles de temps ne se chevauchant pas ; et
en réponse à une demande de connexion au réseau dudit équipement utilisateur de faible complexité, transmettre dans ladite bande passante limitée des informations de commande complémentaires, lesdites informations de commande complémentaires étant transmises durant d'autres intervalles de temps prédéterminés, lesdits autres intervalles de temps prédéterminés chevauchant au moins l'un desdits premiers et deuxièmes intervalles de temps ; dans lequel
lesdites informations de commande complémentaires sont transmises dans une troisième plage de fréquences qui est une plage de fréquences différente ne chevauchant pas lesdites première et deuxième plages de fréquences.

10. Procédé mis en oeuvre dans un équipement utilisateur de faible complexité configuré pour recevoir des informations de commande dans une bande passante de fréquences limitée prédéterminée, ledit procédé comprenant les étapes suivantes :
surveiller une première plage de fréquences dans ladite bande passante de fréquences limitée prédéterminée durant un premier intervalle de temps prédéterminé à la recherche d'informations de commande spécifiques à l'utilisateur ;
surveiller une deuxième plage de fréquences dans ladite bande passante de fréquences limitée prédéterminée durant un deuxième intervalle de temps prédéterminé à la recherche d'informations de commande non spécifiques à l'utilisateur, lesdits premiers et deuxièmes intervalles de temps ne se chevauchant pas ; et
à la suite de la transmission par ledit équipement utilisateur de faible complexité d'une demande de connexion au réseau, surveiller une troisième plage de fréquences dans ladite bande passante limitée prédéterminée durant un autre intervalle de temps à la recherche d'informations de commande complémentaires, ledit autre intervalle de temps prédéterminé chevauchant au moins l'un desdits premiers et deuxièmes intervalles de temps et ladite troisième plage de fréquences ne chevauchant pas lesdites première et deuxième plages de fréquences.

11. Procédé selon la revendication 10, dans lequel lesdites première et deuxième plages de fréquences sont une même plage de fréquence.

12. Procédé selon la revendication 10 ou 11, dans lequel ladite bande passante de fréquences limitée prédéterminée comprend une plage de fréquences englobant une pluralité de blocs de ressources physiques ayant chacun une plage de fréquences différente, dans lequel lesdites informations de commande complémentaires sont reçues dans un sous-ensemble de ladite pluralité de blocs de ressources physiques, et lesdites informations de commande spécifiques ou non spécifiques sont reçues dans un sous-ensemble différent de ladite pluralité de blocs de ressources physiques.

13. Procédé selon l'une quelconque des revendications 10 à 12, comprenant une étape initiale de réception d'informations provenant d'un noeud de réseau indiquant au moins l'un des premiers, deuxièmes et autres intervalles de temps.

14. Un équipement utilisateur de faible complexité comprenant :
un récepteur configuré pour recevoir des informations de commande dans une bande passante de fréquence limitée prédéterminée ;
un ensemble de circuits de surveillance permettant de surveiller une première plage de fréquences au sein de ladite bande passante limitée prédéterminée durant un premier intervalle de temps prédéterminé à la recherche d'informations de commande spécifiques à l'utilisateur ;
un ensemble de circuits de surveillance permettant de surveiller une deuxième plage de fréquences au sein de ladite bande passante limitée prédéterminée durant un deuxième intervalle de temps prédéterminé à la recherche d'informations de commande non spécifiques à l'utilisateur, lesdits premiers et deuxièmes intervalles de temps ne se chevauchant pas ; et
un émetteur permettant de transmettre une demande de connexion au réseau ; dans lequel
ledit ensemble de circuits de surveillance permet de surveiller une troisième plage de fréquences au sein de ladite bande passante limitée prédéterminée durant un autre intervalle de temps à la recherche d'informations de commande complémentaires, ledit autre intervalle de temps prédéterminé chevauchant au moins l'un desdits premiers et deuxièmes intervalles de temps et ladite troisième plage de fréquences ne chevauchant pas lesdites première et deuxième plages de fréquences.

15. Programme informatique qui lorsqu'il est exécuté par un ordinateur permet de commander audit ordinateur de réaliser les étapes d'un procédé selon l'une quelconque des revendications 1 à 8 et 10 à 13.
